# EUROPEAN PATENT APPLICATION

(11) **EP 1 983 665 A1**
(43) Date of publication of application: **22.10.2008**
(21) Application number: 07708179.2
(22) Date of filing: 07.02.2007
(51) Int. Cl.: H04B 7/26, H04J 11/00, H04Q 7/22

(54) **CHANNEL TRANSMISSION METHOD AND BASE STATION**

(30) Priority: 08.02.2006 JP 2006031744
(71) Applicant: NTT DoCoMo, Inc., Chiyoda-ku Tokyo 100-6150 (JP)
(72) Inventor: KISHIYAMA, Yoshihisa, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/052140
(87) International publication number: WO 2007/091606

(57) **Abstract**

A channel transmission method of a base station used in a communication system employing orthogonal frequency division multiplexing (OFDM) is disclosed. The channel transmission method includes the steps of selecting sectors where soft-combining is to be performed based on location information of a mobile station and/or the type of a channel to be transmitted; generating transmission signals each including a pilot signal for demodulation and data of the channel to be soft-combined and transmitting the generated transmission signals to the respective selected sectors; and causing the mobile station to receive and combine the transmission signals arriving from the selected sectors within a guard interval.

## Description

### TECHNICAL FIELD

The present invention generally relates to the field of mobile communication. More particularly, the present invention relates to a channel transmission method and a base station that enable "soft-combining reception" at mobile stations.

### BACKGROUND ART

In multicarrier transmission schemes such as orthogonal frequency division multiplexing (OFDM), a transmitting end modulates an information signal using multiple subcarriers that are orthogonal to each other and transmits the modulated signals in parallel. In such a multicarrier transmission scheme, a guard interval is inserted between symbols of transmission signals to reduce waveform distortion caused by multipath delayed waves.

Meanwhile, a sectoring method of dividing a coverage area of a base station into multiple sectors and allocating different frequencies or codes to the respective sectors is used to increase the number of access users (capacity). Allocating different frequencies or codes to the sectors makes it possible to reduce interference between the sectors. Still, however, the reception quality of a user located at a cell boundary or a sector boundary may be reduced because of the interference between cells or sectors.

Generally, in different sectors, signals with different patterns or different information are transmitted via downlinks even in the same coverage area of a base station. On the other hand, a paging signal informing mobile stations in an area of an incoming call is transmitted to all sectors in the area. Also, in the multimedia broadcast/multicast service (MBMS) where multimedia data are transmitted to multiple unspecified or specified users within an area and which is to be employed in Evolved UTRA (universal terrestrial radio access) intended to evolve third generation standards, the same signal is transmitted to multiple cells or sectors within the area.

### DISCLOSURE OF INVENTION

### PROBLEMS TO BE SOLVED BY THE INVENTION

One objective of the present invention is to provide a technology that improves reception quality in a mobile communication system divided into sectors by utilizing characteristics of OFDM transmission.

### MEANS FOR SOLVING THE PROBLEMS

In a downlink radio access scheme using OFDM, the reception quality can be improved by combining multiple instances of the same signal received via multiple paths, i.e., by delay diversity, if the delay is within a guard interval.

This approach may be applied to channels, such as a multimedia broadcast/multicast service (MBMS) channel and a paging channel, that transmit the same data to users in an area. In other words, the reception quality of such channels may be improved by combining multiple instances of the same signal arriving from different sectors via multiple paths within a guard interval. Receiving and combining multiple instances of a signal within a guard interval in OFDM transmission is hereafter called "soft-combining reception".

Soft-combining reception may be applied not only to MBMS and paging channels but also to channels that may be used to transmit the same signal via different sectors.

Embodiments of the present invention provide a base station and a method of transmitting a channel to be soft-combined and a pilot signal for demodulating the channel which are used in a communication system employing orthogonal frequency division multiplexing (OFDM).

According to a first aspect of the present invention, a channel transmission method includes the steps of:
a) selecting sectors where soft-combining is to be performed based on location information of a mobile station and/or the type of a channel to be transmitted;
b) generating transmission signals each including a pilot signal for demodulation and data of the channel to be soft-combined and transmitting the generated transmission signals to the respective selected sectors; and
c) causing the mobile station to receive and combine the transmission signals arriving from the selected sectors within a guard interval.

According to an embodiment of the present invention, the channel to be soft-combined is a data channel during handover, a paging channel common to the selected sectors, a broadcast channel including broadcast information common to the selected sectors, or a multimedia broadcast/multicast service (MBMS) channel.

As a first example, the channel transmission method further includes the steps of generating instances of the same pilot signal for the respective selected sectors; and generating instances of the same channel to be soft-combined for the respective selected sectors.

As a second example, the channel transmission method further includes the steps of generating different versions of the pilot signal for the respective selected sectors by multiplying the pilot signal by sequences orthogonal to each other; and generating instances of the same channel to be soft-combined for the respective selected sectors.

As a third example, the channel transmission method further includes the steps of generating different versions of the pilot signal for the respective selected sectors by multiplying the pilot signal by sequences orthogonal to each other; and generating different versions of the channel to be soft-combined for the respective selected sectors by multiplying the channel by the same orthogonal sequences as those used for the pilot signal.

As a fourth example, the channel transmission method further includes the steps of allocating different time slots or frequency bands to instances of the pilot signal that are to be transmitted to the respective selected sectors; and generating instances of the same channel to be soft-combined for the respective sectors.

As a fifth example, the channel transmission method further includes the steps of generating different versions of the pilot signal for the respective selected sectors by multiplying the pilot signal by sequences different from each other; and generating different versions of the channel to be soft-combined for the respective selected sectors by multiplying the channel by sequences that are highly correlated with those used for the pilot signal.

A second aspect of the present invention provides a base station used in a communication system employing orthogonal frequency division multiplexing (OFDM). The base station includes:
a) signal generating units provided for respective sectors covered by the base station;
b) a control unit configured to select two or more of the sectors where soft-combining is to be performed based on location information of a mobile station and/or the type of a channel to be transmitted and to cause the signal generating units corresponding to the selected sectors to generate transmission signals each including a pilot signal for demodulation and data of the channel to be soft-combined; and
c) a transmitting unit configured to transmit the transmission signals to the respective selected sectors to allow the mobile station to receive and combine the transmission signals arriving from the selected sectors within a guard interval.

According to an embodiment, the control unit is configured to select the signal generating units corresponding to the sectors where handover takes place based on the location information of the mobile station; and each of the selected signal generating units is configured to generate a data channel during handover as the channel to be soft-combined.

According to another embodiment, the control unit is configured to select all of the signal generating units corresponding to the sectors covered by the base station if the channel to be transmitted is a paging channel, a broadcast channel including broadcast information common to the sectors, or a multimedia broadcast/multicast service (MBMS) channel; and each of the selected signal generating units is configured to generate the paging channel, the broadcast channel, or the MBMS channel as the channel to be soft-combined.

### ADVANTAGEOUS EFFECT OF THE INVENTION

In a system where the same channel can be transmitted to multiple sectors, a channel transmission method and a base station according to embodiments of the present invention enable a mobile station to receive and combine multiple instances of the same signal arriving from multiple sectors in synchronization with each other within a guard interval.

Accordingly, embodiments of the present invention make it possible to improve even the reception quality of a user located at a cell boundary or a sector boundary.

### BRIEF DESCRIPTION OF THE DRAWINGS

FIGs. 1A through 1D are drawings illustrating examples of channels and areas to which soft-combining can be applied;
FIG. 2 is a drawing illustrating a transmission method (1) for implementing soft-combining;
FIG. 3 is a schematic block diagram illustrating a configuration example 1 of a mobile station;
FIG. 4 is a schematic block diagram illustrating an exemplary configuration of a base station;
FIG. 5 is a drawing illustrating a transmission method (2) for implementing soft-combining;
FIG. 6 is a schematic block diagram illustrating a configuration example 2 of a mobile station;
FIG. 7 is a drawing illustrating a transmission method (3) for implementing soft-combining;
FIG. 8 is a drawing illustrating a transmission method (4) for implementing soft-combining; and
FIG. 9 is a drawing illustrating a transmission method (5) for implementing soft-combining.

### EXPLANATION OF REFERENCES

10, 10A, 10B Mobile station (UE)
11 Pilot channel extracting unit
12A, 12B Channel estimation unit
13 Channel variation compensating unit
14 Adder
20, 20A, 20B Base station (eNB)
21 Control unit
22-1, 22-2, 22-3 Signal generating unit
23-1, 23-2, 23-3 Data generating unit for generating channel to be soft-combined
31 Pilot channel
32 Channel to be soft-combined

### BEST MODE FOR CARRYING OUT THE INVENTION

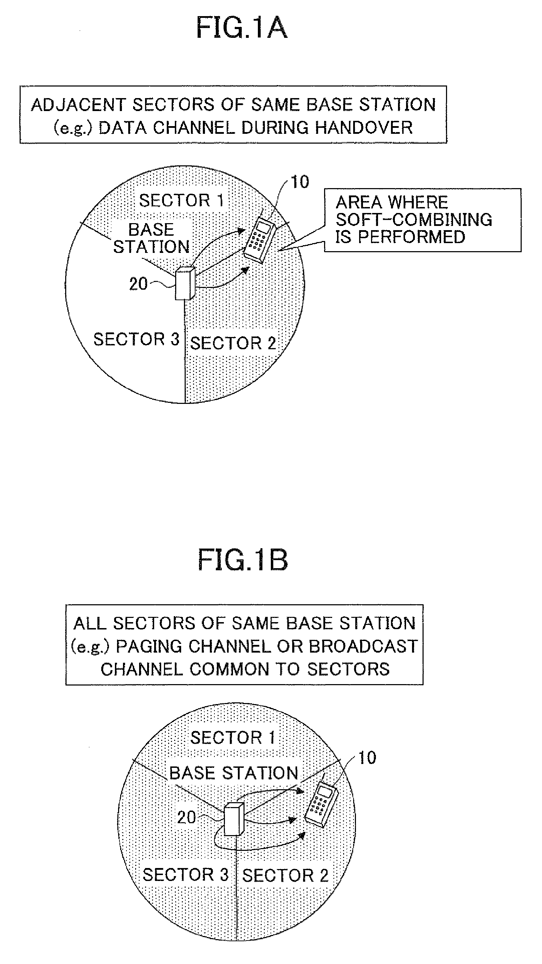

The best mode for carrying out the invention is described based on the following embodiments with reference to the accompanying drawings. FIGs. 1A through 1D are drawings illustrating exemplary channels to which soft-combining can be applied and exemplary geographical areas where soft-combining is performed.

FIG. 1A shows a data channel that is transmitted to multiple sectors during handover. Here, it is assumed that a mobile station (UE) 10 is moving from sector 1 to sector 2 or from sector 2 to sector 1 covered by a base station (eNB) 20. In this example, soft-combining is performed in an area including sectors 1 and 2 where handover takes place. The base station 20 transmits the same data channel to sectors 1 and 2. The mobile station 10 receives and soft-combines instances of the data channel arriving from sectors 1 and 2 within a guard interval.

Thus, the reception quality of a downlink channel using OFDM can be improved even when a user is at a sector boundary by synchronizing the transmission timings of the channel via sectors 1 and 2 and by receiving and combining instances of the channel within a guard interval (synchronizing-and-combining reception or soft-combining reception).

FIG. 1B shows a paging channel or a broadcast channel that is common to and transmitted to multiple sectors. In this example, soft-combining is performed in an area including all sectors 1 through 3 covered by the base station 20.

Normally, broadcast channels are used to transmit different sets of broadcast information to the respective sectors. However, some broadcast information is common to multiple sectors. Such common broadcast information includes, for example, system information and channel configuration information sent from the core network to mobile stations. When broadcast information is common to all sectors, the base station 20 transmits the same broadcast channel to sectors 1 through 3. The mobile station 10 receives multiple instances of the same broadcast channel from sectors 1, 2, and 3, and soft-combines the instances of the same broadcast channel within a guard interval.

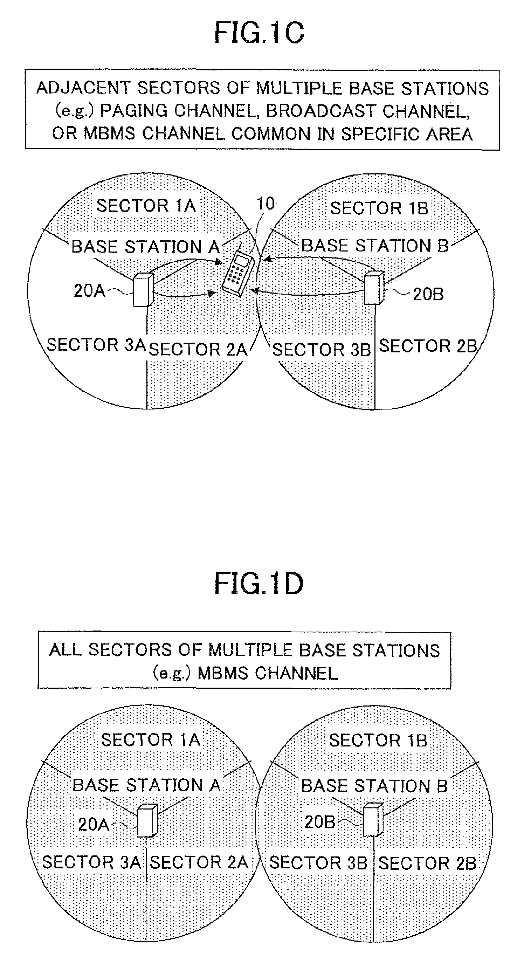

FIG. 1C shows a paging channel, a broadcast channel, or an MBMS channel that is common in a specific area and transmitted to multiple sectors in the area. In this example, soft-combining is performed in an area including sectors 1A and 2A covered by a base station 20A and sectors 1B and 3B covered by an adjacent base station 20B. The mobile station 10 located near a cell boundary between the base station 20A and the base station 20B receives and soft-combines multiple instances of the same channel transmitted from the base stations 20A and 20B via sectors 1A, 2A, 1B, and 3B.

FIG. 1D shows an MBMS channel transmitted within a service area including multiple sectors. In this example, soft-combining is performed in an area including all sectors 1A through 3A and 1B through 3B covered by the base stations 20A and 20B.

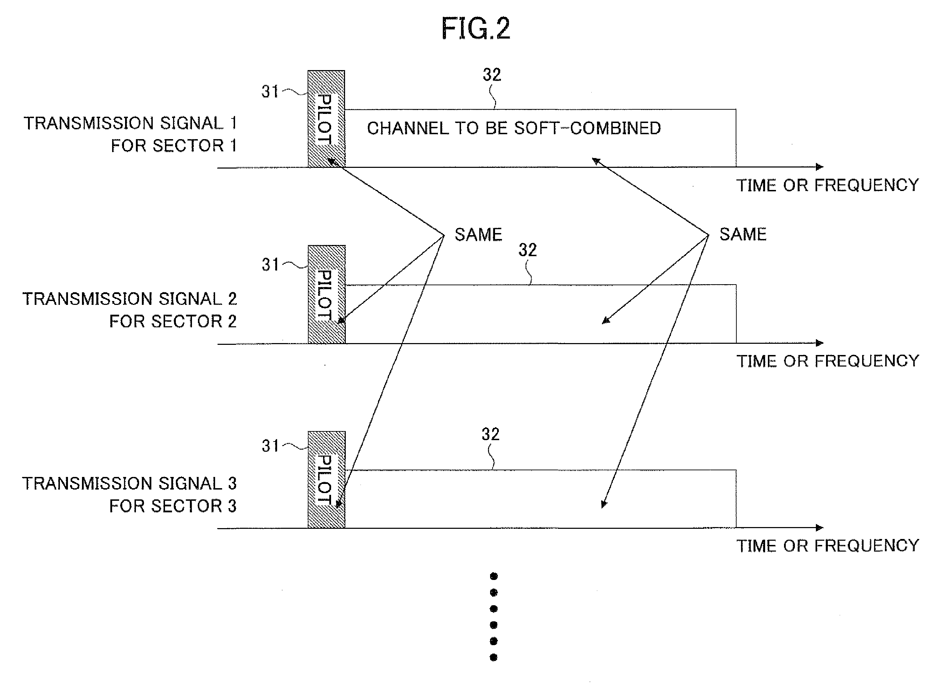

Next, transmission methods for implementing soft-combining are described with reference to FIGs. 2 through 9.

FIG. 2 is a drawing illustrating a transmission method (1) for implementing soft-combining. In the transmission method (1), the base station 20 transmits the same transmission signal including a pilot signal 31 for demodulation and a channel 32 to be soft-combined to the respective sectors 1 through 3 where soft-combining is performed.

Examples of channels to be soft-combined include a data channel as shown in FIG. 1A, a paging channel and a broadcast channel as shown in FIG. 1B, and an MBMS channel as shown in FIG. 1D. The receiving end receives and combines transmission signals 1, 2, and 3 arriving from the respective sectors. Then, a propagation path response of the combined transmission signals 1, 2, and 3 is obtained based on the pilot signals, and the obtained propagation path response is used to demodulate the soft-combined channel.

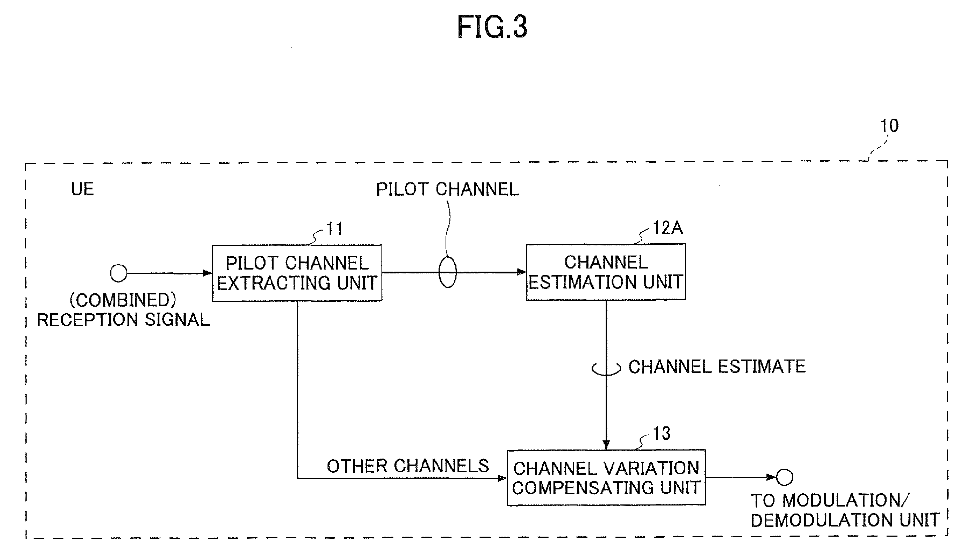

FIG. 3 is a block diagram illustrating a configuration example 1 of the mobile station (UE) 10. A mobile station 10A shown in FIG. 3 includes a pilot channel extracting unit 11 for extracting the pilot channels 31 from a soft-combined reception signal, a channel estimation unit 12A for obtaining a channel estimate based on the extracted pilot channels, and a channel variation compensating unit 13 for compensating for the variation of the channel 32 separated from the pilot channels 31 based on the channel estimate. After the variation is compensated for, the channel 32 is sent to a modulation/demodulation unit (not shown).

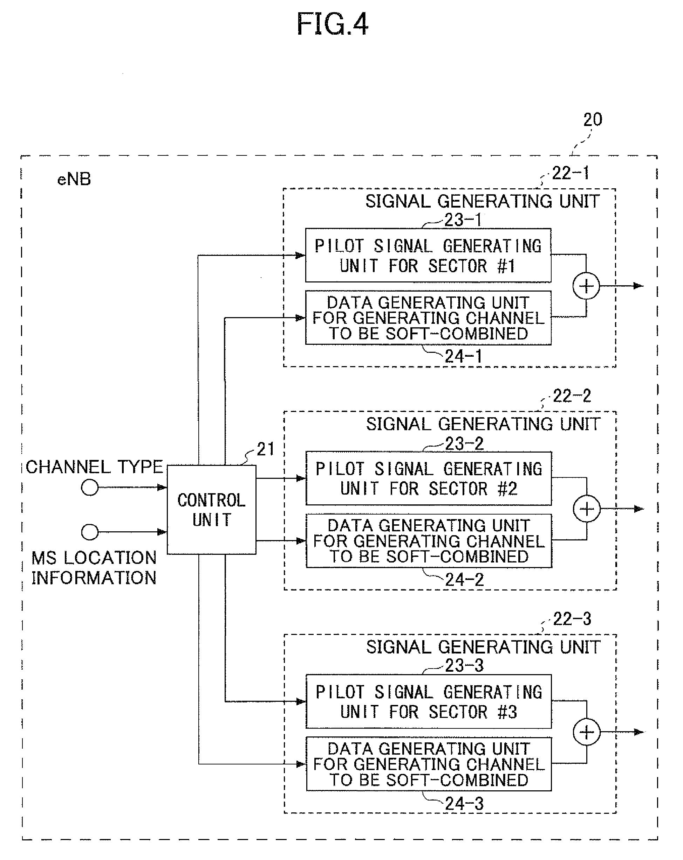

FIG. 4 is a schematic block diagram illustrating an exemplary configuration of the base station (eNB) 20. To implement soft-combining reception by the mobile station 10, the base station 20 includes signal generating units 22-1 through 22-3 corresponding to sectors 1 through 3 and a control unit 21 for selecting the signal generating units 22 corresponding to sectors where soft-combining is to be performed. The control unit 21 selects the signal generating units 22 based on a channel type and/or location information of mobile stations and causes the selected signal generating units 22 to generate instances of the same channel to be soft-combined for the corresponding sectors. Each of the signal generating units 22 includes a pilot signal generating unit 23 for generating the pilot signal 31 to be transmitted to the corresponding sector and a data generating unit 24 for generating the channel 32 to be soft-combined.

In the example shown in FIG. 1A, soft-combining is performed in sectors 1 and 2 for the mobile station 10 being handed over. The control unit 21 of the base station 20 detects that the mobile station 10 is being handed over from sector 1 to sector 2 or vice versa based on the location information of the mobile station 10. Then, the control unit 21 selects the signal generating units 22-1 and 22-2 corresponding to sectors 1 and 2 and causes the pilot signal generating units 23-1 and 23-2 of the selected signal generating units 22 to generate instances of the same pilot signal 31. Also, the control unit 21 causes the data generating units 24 of the selected signal generating units 22 to generate instances of the same channel 32 to be soft-combined.

In the example shown in FIG. 1B, the control unit 21 selects all of the signal generating units 22-1 through 22-3 corresponding to sectors 1 through 3 based on a channel type such as a paging channel or a broadcast channel for broadcasting common information. The signal generating units 22-1 through 22-3 generate instances of the same pilot signal 31 and instances of the same paging channel or broadcast channel as the channel 32 to be soft-combined. Then, each of the signal generating units 22-1 through 22-3 generates a transmission signal by combining the pilot signal 31 and the channel 32 and transmits the generated signal from a transmitter (not shown) to the corresponding sector.

Thus, the base station 20 selects the signal generating units 22 corresponding to sectors where soft-combining is to be performed based, for example, on the status of the mobile station 10 and the type of a channel to be transmitted, and thereby generates instances of the same pilot signal 31 and the same channel 32 for the sectors. This configuration makes it possible to enable a receiving end to receive and soft-combine signals arriving from multiple sectors and thereby to improve the reception quality.

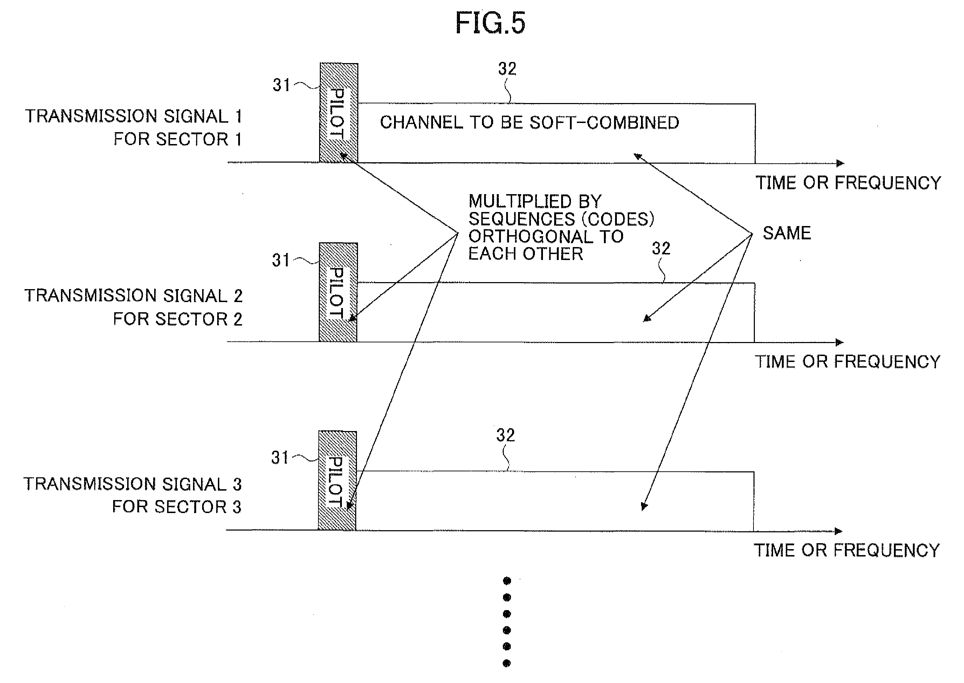

FIG. 5 is a drawing illustrating a transmission method (2) for implementing soft-combining. In the transmission method (2), the pilot signal 31 used for demodulation is multiplied by sequences (codes) orthogonal to each other, and the multiplied versions of the pilot signal 31 and multiple instances of the same channel to be soft-combined are transmitted.

The receiving end obtains propagation path responses of the respective transmission signals based on the orthogonal pilot signals, combines the propagation path responses, and demodulates the soft-combined channel based on the combined channel estimate (propagation path response).

In the above example, the transmission signals 1 through 3 containing instances of the same channel are transmitted to the corresponding sectors 1 through 3. In the case of FIG. 1A where soft-combining is performed in two sectors, the base station 20 generates the transmission signals 1 and 2 by multiplying the pilot signals by orthogonal codes. Also, in the case of FIG. 1D where the same channel is transmitted to all sectors covered by the adjacent base stations 20A and 20B, each of the base stations 20A and 20B transmits the transmission signals 1 through 3 as shown in FIG. 5.

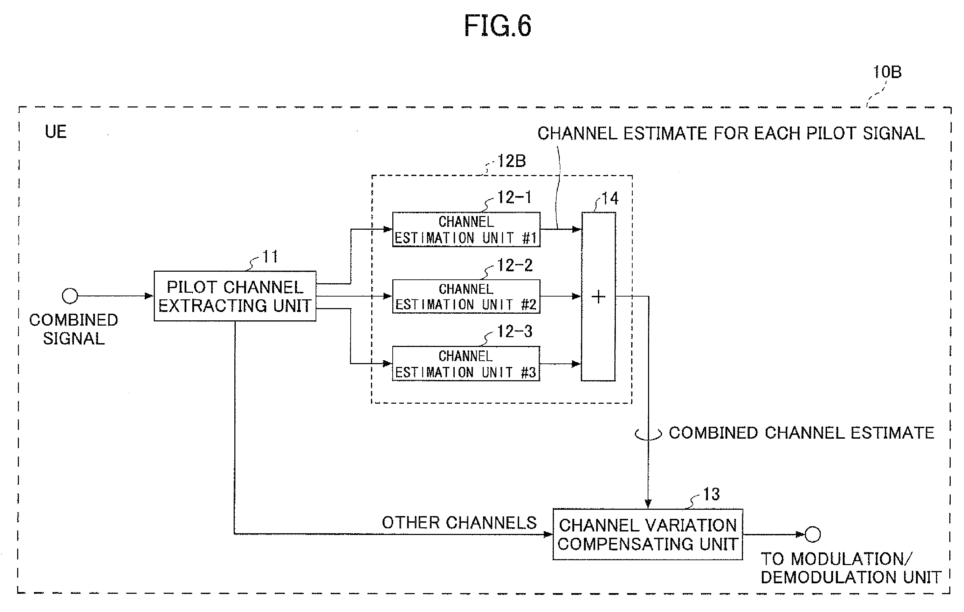

FIG. 6 is a schematic block diagram illustrating a configuration example 2 of the mobile station (UE) 10. A mobile station 10B shown in FIG. 6 is suitable for the transmission method (2). A pilot channel extracting unit 11 separates pilot signals and other channels in a soft-combined signal and thereby extracts the pilot signals. A channel estimation unit 12B includes channel estimation units 12-1, 12-2, and 12-3 corresponding to the respective pilot signals and an adder 14. The channel estimation units 12-1, 12-2, and 12-3 calculate channel estimates, and the adder 14 combines the channel estimates and outputs a combined channel estimate. A channel variation compensating unit 13 compensates for the variation of the channels remaining after the pilot signals are removed based on the combined channel estimate (propagation path response), and sends the channels to a modulation/demodulation unit (not shown).

With the transmission method (2) and the above configuration of the mobile station 10B, the base station 20 does not have to make uniform the patterns of pilot signals to be transmitted to the respective sectors each time soft-combining is performed. In other words, the control unit 21 can generate pilot signals to be sent to sectors where soft-combining is to be performed by just multiplying a normal pilot signal, which is normally transmitted in different patterns to the respective sectors, by sequences (codes) orthogonal to each other.

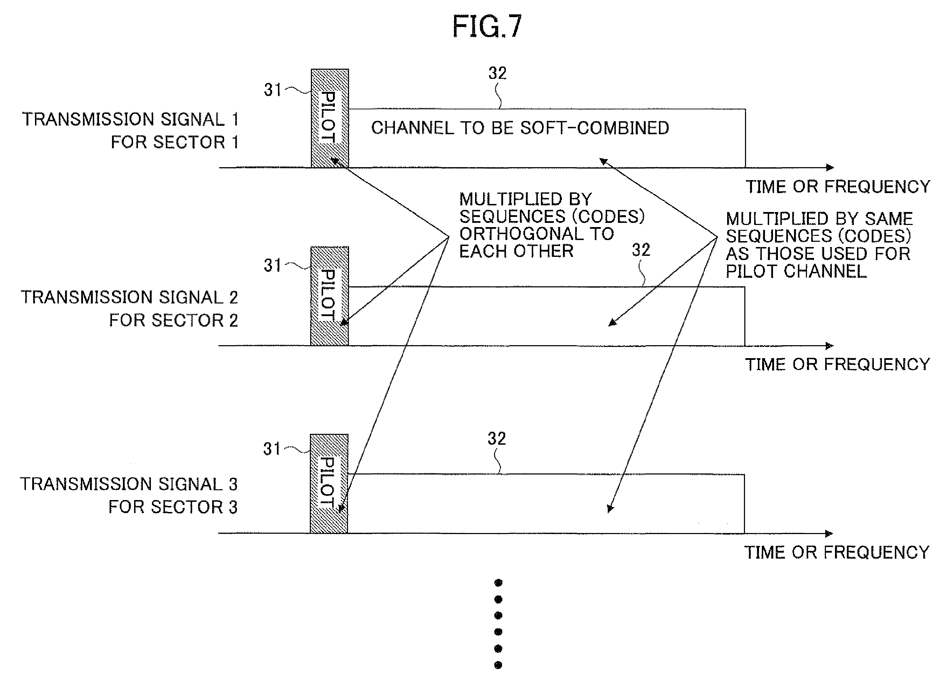

FIG. 7 is a drawing illustrating a transmission method (3) for implementing soft-combining. In the transmission method (3), the pilot signal 31 used for demodulation is multiplied by sequences (codes) orthogonal to each other, a channel to be soft-combined is also multiplied by the same orthogonal sequences as those used for the pilot signal 31, and the multiplied versions of the pilot signal 31 and the channel are transmitted. Therefore, in this case, patterns of the pilot signal and the channel to be soft-combined in each of the transmission signals 1, 2, and 3 are identical.

The receiving end combines the transmission signals, obtains a propagation path response of the combined transmission signals based on the orthogonal pilot signals, and demodulates the soft-combined channel based on the obtained propagation path response. In this case, the mobile station 10A configured as shown in FIG. 3 may be used.

Similar to the transmission method (2), the transmission method (3) also makes it possible to use a normal pilot signal transmitted in different patterns to the respective sectors to generate pilot signals used for soft-combining.

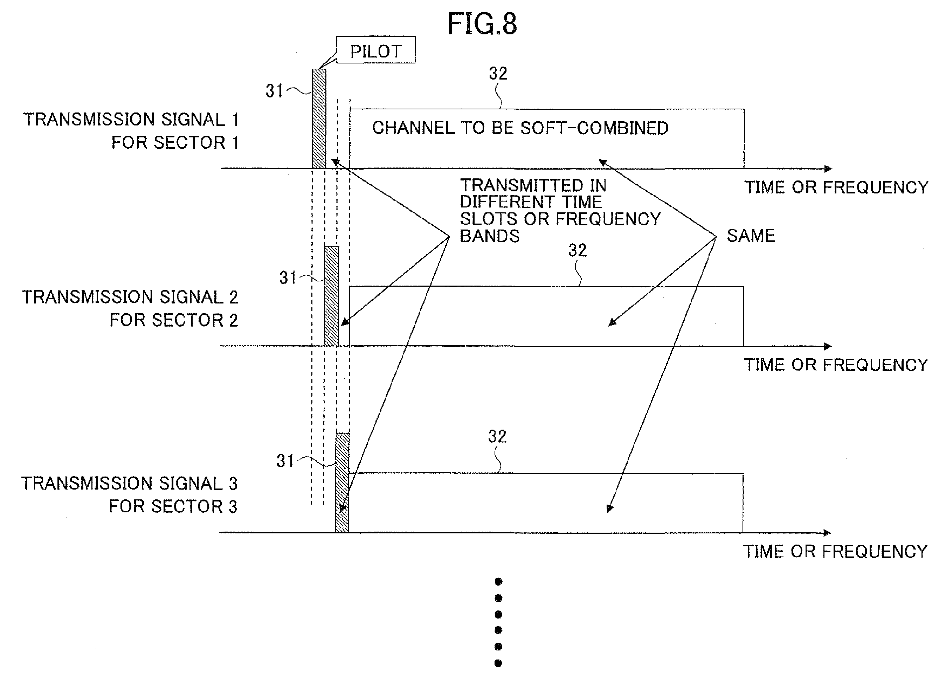

FIG. 8 is a drawing illustrating a transmission method (4) for implementing soft-combining. In the transmission method (4), instances of the pilot signal 31 used for demodulation are allocated different time slots or frequency bands in the respective transmission signals 1 through 3 to be transmitted to the corresponding sectors. Instances of the same channel to be soft-combined are transmitted in substantially the same manner as in the above methods. For example, the pilot signal 31 of the transmission signal 1 is transmitted using symbol 1 or subcarrier 1; the pilot signal 31 of the transmission signal 2 is transmitted using symbol 2 or subcarrier 2; and the pilot signal 31 of the transmission signal 3 is transmitted using symbol 3 or subcarrier 3.

The receiving end obtains propagation path responses of the respective transmission signals based on the pilot signals received in different time slots or frequency bands, combines the propagation path responses, and performs compensation and demodulation of the soft-combined channel based on the combined channel estimate (propagation path response). In this case, the mobile station 10B configured as shown in FIG. 6 may be used.

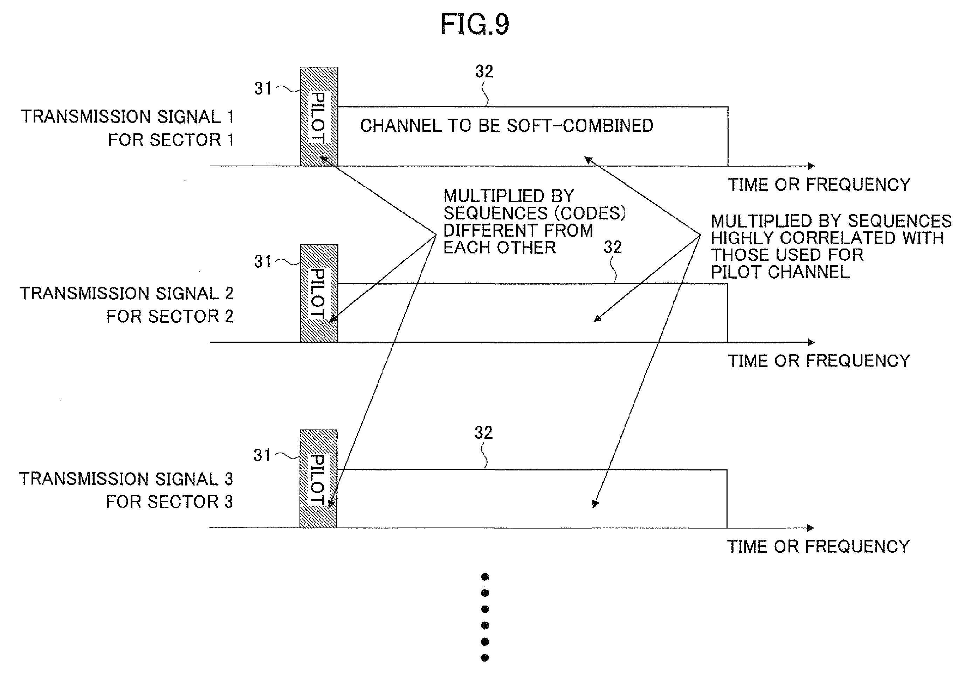

FIG. 9 is a drawing illustrating a transmission method (5) for implementing soft-combining. In the transmission method (5), the pilot signal 31 used for demodulation is multiplied by sequences (codes) different from each other, a channel to be soft-combined is also multiplied by sequences that are highly correlated with those used for the pilot signal 31, and the multiplied versions of the pilot signal 31 and the channel are transmitted.

The receiving end combines the transmission signals, obtains a propagation path response of the combined transmission signals based on the pilot signals multiplied by different sequences, and performs compensation and demodulation of the soft-combined channel based on the obtained propagation path response. In this case, the mobile station 10A configured as shown in FIG. 3 may be used.

The transmission methods (3) and (5) are similar to each other. However, with the transmission method (3) where the pilot channel is multiplied by orthogonal sequences, the area or the number of sectors to which orthogonal pilot channels can be assigned is limited because the number of the orthogonal sequences is limited.

On the other hand, with the transmission method (5) where the pilot channel is multiplied by sequences (codes) different from each other, the number of different sequences (codes) is large compared with the number of orthogonal sequences. Therefore, the transmission method (5) is preferable in a case where a channel to be soft-combined is transmitted to a large number of sectors. For example, the transmission method (5) is preferable when soft-combining is applied to an MBMS channel that is transmitted across a comparatively large area.

In any one of the above methods, the control unit 21 of the base station 10 selects sectors where soft-combining is to be performed based on location information of mobile stations and/or a channel type, and causes the signal generating units corresponding to the selected sectors to generate instances of the same pilot signal or to generate pilot signals by multiplying a normal pilot signal by orthogonal codes or sequences different from each other. The control unit 21 also causes the signal generating units to generate instances of the same channel to be soft-combined for the respective sectors, or to generate different versions of the channel to be soft-combined by multiplying the channel by the same orthogonal codes as those used for the pilot signal or by sequences highly correlated with those used for the pilot signal. Thus, the base station 10 enables soft-combining reception by the mobile station 10.

The present international application claims priority from Japanese Patent Application No. 2006-031744 filed on February 8, 2006, the entire contents of which are hereby incorporated herein by reference.

## Claims

1. A channel transmission method used in a communication system employing orthogonal frequency division multiplexing (OFDM), the method comprising the steps of:
selecting sectors where soft-combining is to be performed based on location information of a mobile station and/or the type of a channel to be transmitted;
generating transmission signals each including a pilot signal for demodulation and data of the channel to be soft-combined and transmitting the generated transmission signals to the respective selected sectors; and
causing the mobile station to receive and combine the transmission signals arriving from the selected sectors within a guard interval.

2. The channel transmission method as claimed in claim 1, wherein the channel to be soft-combined is a data channel during handover, a paging channel common to the selected sectors, a broadcast channel including broadcast information common to the selected sectors, or a multimedia broadcast/multicast service (MBMS) channel.

3. The channel transmission method as claimed in claim 1, further comprising the steps of:
generating instances of the same pilot signal for the respective selected sectors; and
generating instances of the same channel to be soft-combined for the respective selected sectors.

4. The channel transmission method as claimed in claim 1, further comprising the steps of:
generating different versions of the pilot signal for the respective selected sectors by multiplying the pilot signal by sequences orthogonal to each other; and
generating instances of the same channel to be soft-combined for the respective selected sectors.

5. The channel transmission method as claimed in claim 1, further comprising the steps of:
generating different versions of the pilot signal for the respective selected sectors by multiplying the pilot signal by sequences orthogonal to each other; and
generating different versions of the channel to be soft-combined for the respective selected sectors by multiplying the channel by the same orthogonal sequences as those used for the pilot signal.

6. The channel transmission method as claimed in claim 1, further comprising the steps of:
allocating different time slots or frequency bands to instances of the pilot signal that are to be transmitted to the respective selected sectors; and
generating instances of the same channel to be soft-combined for the respective sectors.

7. The channel transmission method as claimed in claim 1, further comprising the steps of:
generating different versions of the pilot signal for the respective selected sectors by multiplying the pilot signal by sequences different from each other; and
generating different versions of the channel to be soft-combined for the respective selected sectors by multiplying the channel by sequences that are highly correlated with those used for the pilot signal.

8. A base station used in a communication system employing orthogonal frequency division multiplexing (OFDM), the base station comprising:
signal generating units provided for respective sectors covered by the base station;
a control unit configured to select two or more of the sectors where soft-combining is to be performed based on location information of a mobile station and/or the type of a channel to be transmitted and to cause the signal generating units corresponding to the selected sectors to generate transmission signals each including a pilot signal for demodulation and data of the channel to be soft-combined; and
a transmitting unit configured to transmit the transmission signals to the respective selected sectors to allow the mobile station to receive and combine the transmission signals arriving from the selected sectors within a guard interval.

9. The base station as claimed in claim 8, wherein
the control unit is configured to select the signal generating units corresponding to the sectors where handover takes place based on the location information of the mobile station; and
each of the selected signal generating units is configured to generate a data channel during handover as the channel to be soft-combined.

10. The base station as claimed in claim 8, wherein
the control unit is configured to select all of the signal generating units corresponding to the sectors covered by the base station if the channel to be transmitted is a paging channel, a broadcast channel including broadcast information common to the sectors, or a multimedia broadcast/multicast service (MBMS) channel; and
each of the selected signal generating units is configured to generate the paging channel, the broadcast channel, or the MBMS channel as the channel to be soft-combined.

11. The base station as claimed in claim 8, wherein the respective signal generating units corresponding to the selected sectors are configured to generate instances of the same pilot signal and instances of the same channel to be soft-combined.

12. The base station as claimed in claim 8, wherein the respective signal generating units corresponding to the selected sectors are configured to generate different versions of the pilot signal by multiplying the pilot signal by sequences orthogonal to each other and to generate instances of the same channel to be soft-combined.

13. The base station as claimed in claim 8, wherein the respective signal generating units corresponding to the selected sectors are configured to generate different versions of the pilot signal by multiplying the pilot signal by sequences orthogonal to each other and to generate different versions of the channel to be soft-combined by multiplying the channel by the same orthogonal sequences as those used for the pilot signal.

14. The base station as claimed in claim 8, wherein the respective signal generating units corresponding to the selected sectors are configured to allocate different time slots or frequency bands to instances of the pilot signal and to generate instances of the same channel to be soft-combined.

15. The base station as claimed in claim 8, wherein the respective signal generating units corresponding to the selected sectors are configured to generate different versions of the pilot signal by multiplying the pilot signal by sequences different from each other and to generate different versions of the channel to be soft-combined by multiplying the channel by sequences that are highly correlated with those used for the pilot signal.
